# EUROPÄISCHE PATENTSCHRIFT

(11) **EP 1 637 369 B1**
(45) Veröffentlichungstag und Bekanntmachung des Hinweises auf die Patenterteilung: **15.08.2007**
(21) Anmeldenummer: 05018742.6
(22) Anmeldetag: 30.08.2005
(51) Int. Cl.: B60G 17/056

(54) **Fahrwerksregelung für ein Fahrzeug**
Suspension control apparatus of vehicle
Dispositif de réglage de suspension pour véhicule

(30) Priorität: 15.09.2004 DE 102004044726
(43) Veröffentlichungstag der Anmeldung: 22.03.2006
(73) Patentinhaber: Bayerische Motoren Werke Aktiengesellschaft, 80809 München (DE)
(72) Erfinder: Heyl, Gerrit, 82131 Gauting (DE); Priese, Jens, 80807 München (DE); Corleis, Claas-Tido, 21702 Ahlerstedt-Ottendorf (DE)

(56) Entgegenhaltungen:
- DE-A1- 3 827 737
- DE-A1- 4 003 781
- US-A- 4 610 462
- US-A- 5 184 841
- US-A1- 2001 004 147
- PATENT ABSTRACTS OF JAPAN Bd. 010, Nr. 062 (M-460), 12. März 1986 (1986-03-12) & JP 60 209312 A (MAZDA KK), 21. Oktober 1985 (1985-10-21)
- PATENT ABSTRACTS OF JAPAN Bd. 010, Nr. 218 (M-503), 30. Juli 1986 (1986-07-30) & JP 61 057416 A (MAZDA MOTOR CORP), 24. März 1986 (1986-03-24)

## Beschreibung

Die vorliegende Erfindung betrifft eine Radaufhängung gemäß den Merkmalen des Patentanspruches 1 sowie ein Verfahren zum Regeln des Ausfahrzustands einer ausfahrbaren Radaufhängung gemäß den Merkmalen des Patentanspruches 2.

Bereits seit geraumer Zeit gibt es luftgefederte Pkw mit einer automatischen Niveauregulierung. Bei diesen Fahrzeugen können die "Radaufhängungen" pneumatisch ausgefahren und durch "Entlüften" wieder eingefahren werden. Fahrzeuge mit pneumatischer Federung weisen üblicherweise einen Luftvorratsbehälter auf, der von einem Verdichter mit Pressluft befüllt wird. Über elektronisch ansteuerbare Ventile können die einzelnen Luftfedern mit Druckluft aus dem Luftvorratsbehälter befüllt bzw. entlüftet werden, was ein Ausfahren bzw. Einfahren der einzelnen Radaufhängungen ermöglicht.

Eine solche Niveauregulierung ist bekannt aus DE-A-4003781.

Ferner sind Motorräder mit höhenverstellbaren Fahrwerken bekannt, bei denen der Fahrer per Knopfdruck einen Kompressor anschalten und das Motorrad pneumatisch anheben kann. Durch Betätigen eines Entlüftungsventils kann das Motorrad wieder abgesenkt werden. Wünschenswert wäre eine Fahrwerksregelung, bei der die "Höhe" des Motorrads automatisch während der Fahrt auf eine "optimale Sollhöhe" geregelt wird. Bei einer Verstellung der Höhe im Stand besteht nämlich das Problem, dass der Fahrer zum Anhalten die Beine auf den Boden absetzen muss und das Motorrad dadurch entlastet wird und dementsprechend ausfedert. Beim erneuten Anfahren wird das Motorrad dann wieder mit dem vollen Gewicht des Fahrers belastet und federt ein Stück weit ein. Fahrwerksregelsysteme mit Luftvorratsbehältern, wie Sie aus dem Pkw-Bereich bekannt sind, sind für Motorräder aber nicht geeignet, da der für die Unterbringung eines Luftvorratsbehälters erforderliche Bauraum nicht zur Verfügung steht.

Aufgabe der Erfindung ist es, eine Radaufhängung und ein Verfahren zur Regelung einer Radaufhängung zu schaffen, bei der bzw. mit dem eine einfache Regelung des Ausfahrzustands der Radaufhängung während der Fahrt möglich ist.

Diese Aufgabe wird durch die Merkmale der Patentansprüche 1 und 2 gelöst. Vorteilhafte Ausgestaltungen und Weiterbildungen der Erfindung sind den Unteransprüchen zu entnehmen.

Der Erfindung liegt die Idee zugrunde, den Ausfahrzustand der Radaufhängung elektronisch zu regeln und zwar nicht auf der Basis des momentanen Ist-Ausfahrzustandes, sondern auf der Basis von zwei geglätteten "Ausfahrzustandssignalen", die aus gemessenen Ist- Ausfahrzustandssignalen gemäß vorgegebenen "Bildungsgesetzen" abgeleitet werden. Die Regelung des Ausfahrzustands der Radaufhängung erfolgt durch eine Regelelektronik. An die Regelelektronik ist eine Sensorik angeschlossen, mit welcher der momentane Ausfahrzustand der Radaufhängung gemessen wird. Der Ausfahrzustand kann analog oder digital gemessen werden und z. B. über den CAN-Bus an die Regelelektronik übertragen werden. Der "Ausfahrzustand" kann beispielsweise als Abstand zwischen dem "Fahrzeugaufbau" und dem Radträger definiert sein, als Schwenkwinkel o. ä. Die Sensorik liefert ein dem momentanen Ausfahrzustand entsprechendes Ist-Signal an die Regelelektronik.

Die Regelelektronik weist einen Speicher auf, in dem der momentan gemessene Ausfahrzustand und zeitlich zurückliegend gemessene Ausfahrzustände gespeichert werden. Aus dem momentanen Ausfahrzustand und zeitlich zurückliegenden Ausfahrzuständen bildet die Elektronik ein erstes und ein zweites geglättetes "Ausfahrzustandssignal". Das erste geglättete Ausfahrzustandssignal kann z. B. auf der Basis der während der letzten 20 Sekunden gemessenen Ausfahrzustandsignale gebildet werden. Das zweite geglättete Ausfahrzustandssignal kann beispielsweise auf Basis der während der letzten zwei Sekunden gemessenen Ausfahrzustandessignale gebildet werden. Die "Zeitkonstante" des ersten abgeglätteten Ausfahrzustandssignals ist also größer als die Zeitkonstante des zweiten geglätteten Ausfahrzustandssignals. Die geglätteten Ausfahrzustandssignale können z. B. durch eine Tiefpassfilterung erzeugt werden. Alternativ dazu ist es auch möglich, aus einzelnen digitalen Messwerten den arithmetischen Mittelwert oder einen in geeigneter Weise gewichteten Mittelwert zu bilden. Ganz allgemein gesprochen handelt es sich bei den geglätteten Ausfahrzustandssignalen um "gefilterte" Signale, wobei das zweite geglättete Ausfahrzustandssignal aufgrund seiner im Vergleich zu dem ersten geglätteten Ausfahrzustandssignal kleineren Zeitkonstante dem Ist-Signal stärker ähnelt als das erste geglättete Ausfahrzustandsignal. Bei der Bildung des ersten Ausfahrzustandssignals werden also höherfrequente Schwingungen des Ist-Ausfahrzustandssignals stärker herausgefiltert als bei der Bildung des zweiten geglätteten Ausfahrzustandssignals.

Die Regelung des Ausfahrzustands der Radaufhängung orientiert sich an einem vorgegebenen "Ausfahrzustandsband", das ausgehend von einem vorgegebenen Soll-Ausfahrzustand durch einen oberen Grenzwert und einen unteren Grenzwert definiert ist. Der obere Grenzwert liegt um einen Wert X oberhalb des Soll-Ausfahrzustands. Der untere Grenzwert liegt um einen Wert Y unterhalb des Soll-Ausfahrzustands. Die Werte X und Y können gleich oder unterschiedlich sein.

Während des Betriebs des Fahrzeugs überprüft die Regelektronik permanent, ob die beiden geglätteten Ausfahrzustandssignale innerhalb oder außerhalb des vorgegebenen "zulässigen Signalbandes" liegen. Wenn eines der geglätteten Ausfahrzustandssignale oder beide geglättete Ausfahrzustandssignale innerhalb des Signalbandes liegen, greift die Regelelektronik nicht ein, d. h. der Ausfahrzustand der Radaufhängung wird unverändert gehalten.

Wenn hingegen beide geglättete Ausfahrzustandssignale den unteren Grenzwert unterschreiten, d. h. wenn sich das Fahrzeug an der zu regelnden Radaufhängung längere Zeit absenkt, greift die Regelektronik ein und fährt die Radaufhängung ausgehend von dem momentanen Ausfahrzustand weiter aus. Die Regelelektronik fährt die Radaufhängung so lange weiter aus, bis eines der beiden geglätteten Ausfahrzustandssignale den vorgegebenen Soll-Ausfahrzustand erreicht. Sobald eines der beiden geglätteten Ausfahrzustandssignale den vorgegebenen Sollwert erreicht, wird die "Nachregelung" des Ausfahrzustands, d. h. das weitere Ausfahren beendet.

Sofern bei der weiteren Überwachung des Ausfahrzustands festgestellt wird, dass die beiden geglätteten Ausfahrzustandssignale den oberen Grenzwert des Signalbandes überschreiten, wird dies von der Regelelektronik als "Überschwingen" interpretiert. Bei einem "Überschwingen" greift die Regelelektronik ebenfalls ein, in dem sie die Radaufhängung einfährt, bis eines der beiden geglätteten Ausfahrzustandssignale den Sollwert erreicht.

Das oben beschriebene auf zwei geglätteten Ausfahrzustandssignalen basierende Regelungskonzept eignet sich vor allem für Fahrzeuge, bei denen der "Fahrzeugaufbau" relativ stark um einen Mittelwert schwankt, wie dies z. B. bei Motorrädern der Fall ist. Eine derartige Regelung kann sowohl am Vorderrad als auch am Hinterrad vorgesehen sein.

Eine derartige Regelung kann insbesondere bei Fahrzeugen vorgesehen sein, die mit einer Luftfederung ausgestattet sind. Zum Ausfahren der Radaufhängung wird die Luftfeder mit Druckluft beaufschlagt, zum Einfahren der Radaufhängung wird die Luftfeder entlüftet. Das Regelungskonzept gemäß der Erfindung hat gegenüber herkömmlichen Luftfederregelsystemen den Vorteil, dass ein Druckluftspeicher nicht unbedingt erforderlich ist, d. h. dass die Luftfeder unmittelbar vom Verdichter bzw. Kompressor mit Druckluft beaufschlagt werden kann. Da die "Regelabweichung" nicht auf der Basis des gemessenen Ist-Ausfahrzustandssignals, sondern auf Basis der geglätteten Ausfahrzustandssignale ermittelt wird, sind Regeleingriffe relativ selten. Der Kompressor muss also nicht permanent ein- und wieder ausgeschaltet werden, sondern nur vergleichsweise selten, was sich vorteilhaft auf die Lebensdauer des Kompressors auswirkt. Um die Radaufhängung einzufahren, ist ein Entlüftungsventil vorgesehen, das ebenfalls durch die Regelelektronik angesteuert und das ein Entlüften der Luftfeder ermöglicht. Aufgrund des Eigengewichts des Fahrzeugs fährt die Radaufhängung beim Entlüften der Luftfeder selbsttätig ein.

Im folgenden wird die Erfindung im Zusammenhang mit der Zeichnung näher erläutert. Es zeigen:
- Figur 1: ein schematisches Blockschaltbild zur Erläuterung des Regelungskonzepts einer Radaufhängung gemäß der Erfindung;
- Figur 2: ein Diagramm mit Signalverläufen des Ist-Ausfahrzustandssignals sowie der beiden daraus abgeleiteten geglätteten Ausfahrzustandssignale.

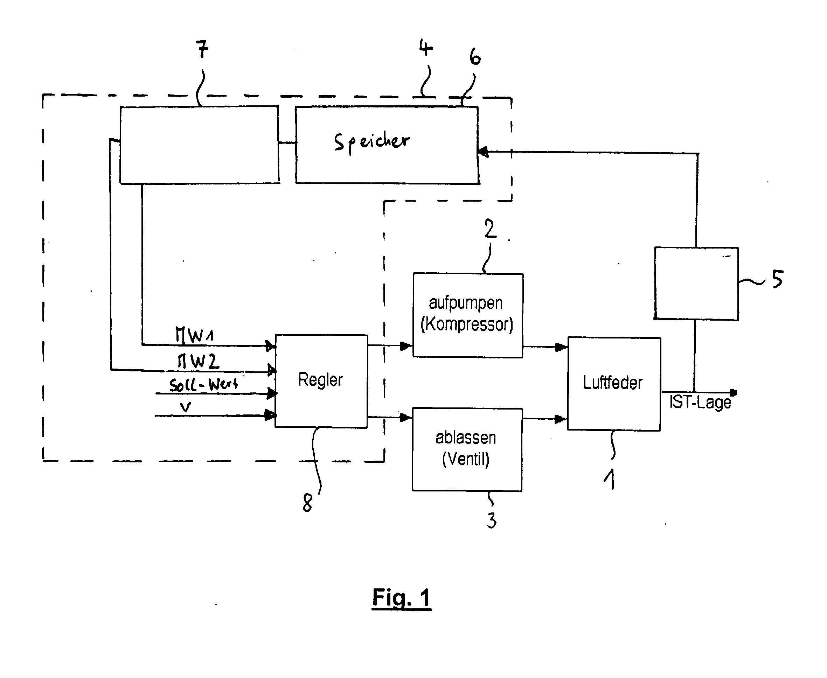

Figur 1 zeigt ein Blockschaltbild zur Erläuterung des Regelungskonzepts einer Radaufhängung gemäß der Erfindung. Die Radaufhängung (nicht dargestellt) weist eine Luftfeder 1 auf, die durch einen Kompressors 2 mit Druck beaufschlagbar ist und über ein Entlüftungsventil 3 entlüftet werden kann. Durch Beaufschlagen der Luftfeder 1 mit Druckluft kann die Radaufhängung ausgefahren werden. Durch Entlüften wird die Radaufhängung aufgrund des Eigengewichts des Fahrzeugs selbsttätig eingefahren.

Der Kompressor 2 und das Entlüftungsventil 3 werden durch eine Regelungselektronik 4 angesteuert. Mittels eines Positionssensors 5 wird der momentane Ausfahrzustand der Radaufhängung abgetastet. Die Regelungselektronik 4 weist einen Speicher 6 auf, in dem der momentane Ausfahrzustand sowie zeitlich zurückliegend gemessene Ausfahrzustände abgespeichert werden.

Aus dem momentanen Ausfahrzustand sowie aus zeitlich zurückliegenden Ausfahrzustandssignalen, die im Speicher 6 gespeichert sind, ermittelt ein Rechner 7 geglättete Ausfahrzustandssignale, die im folgenden auch als "Mittelwertsignale" MW1 bzw. MW2 bezeichnet werden. Das Mittelwertsignal MW1 wird beispielsweise aus den während der letzten 20 Sekunden gemessenen Ist-Ausfahrzustandssignalen ermittelt. Das Mittelwertsignal MW2 wird z. B. aus den während der letzten zwei Sekunden gemessenen Ist-Ausfahrzustandssignalen ermittelt. Das geglättete Signal MW1 weist also eine größere Zeitkonstante auf als das Signal MW2. Die beiden geglätteten Ausfahrzustandssignale MW1 und MW2 werden einem Regler 8 zugeführt. Dem Regler 8 wird ferner ein Sollwert für den Ausfahrzustand der Radaufhängung und ein der momentanen Fahrzeuggeschwindigkeit entsprechendes Signal v zugeführt.

Es kann vorgesehen sein, dass eine aktive Regelung des Ausfahrzustandes der Radaufhängung nur dann erfolgt, wenn sich das Fahrzeug bewegt, d. h. wenn v > 0 ist oder wenn die Fahrzeuggeschwindigkeit einen vorgegebenen Geschwindigkeitswert überschreitet, d. h. wenn v > v₀ ist.

In Abhängigkeit von den Signalen MW1, MW2, dem Sollwert und der Fahrzeuggeschwindigkeit v steuert der Regler 8 entweder den Kompressor 2 an, wodurch die Luftfeder aufgepumpt und die Radaufhängung ausgefahren wird, oder das Ventil 3, wodurch die Luftfeder 1 entlüftet und die Radaufhängung eingefahren wird.

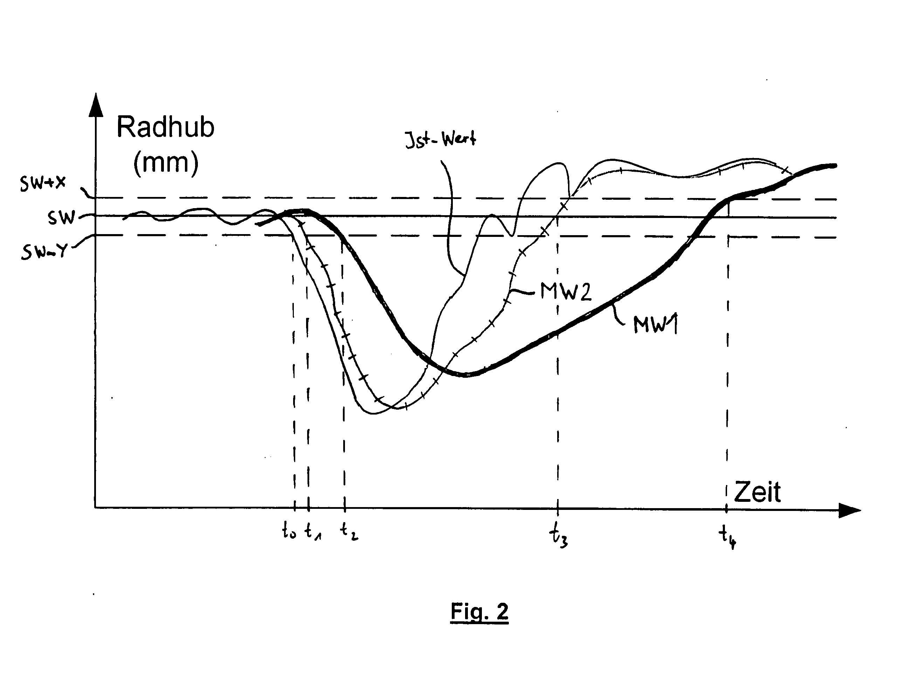

Figur 2 zeigt ein Diagramm, in dem der Radhub über der Zeit aufgetragen ist. In dem Diagramm ist der Signalverlauf des mittels des Sensors 5 (vgl. Figur 1) gemessenen Ist-Ausfahrzustands dargestellt, sowie die aus dem momentanen Ist-Ausfahrzustand und zeitlich zurückliegend gemessenen Ist-Ausfahrzuständen abgeleitete geglättete Ausfahrzustandssignale MW1, MW2.

Ziel der Regelung ist es, den Ist-Ausfahrzustand in einem Bereich um einen Soll-Ausfahrzustand SW zu halten. Hierzu ist ein "Toleranzband" vorgegeben. Das Toleranzband ist durch einen oberen Grenzwert SW+X und einen unteren Grenzwert SW-Y definiert. Der obere und der untere Grenzwert können symmetrisch oder asymmetrisch um den Sollwert SW liegen.

Im folgenden wird die Regelstrategie näher erläutert. Bis zu einem Zeitpunkt t₀ schwankt der Ist-Ausfahrzustand geringfügig um den Sollwert SW. Im Zeitpunkt t₀ unterschreitet der Ist-Ausfahrzustand den unteren Grenzwert SW-Y und sinkt relativ steil ab. Dies entspricht bei einem Motorrad beispielsweise einer Situation, bei der ein Sozius auf das Motorrad aufsteigt.

Im Zeitpunkt t₁ unterschreitet mit einer gewissen zeitlichen Verzögerung das geglättete Ausfahrzustandssignal MW2 den unteren Grenzwert SW-Y. Das geglättete Ausfahrzustandssignal MW2 weist im Vergleich zu dem geglätteten Ausfahrzustandssignal MW1 eine relativ kleine Zeitkonstante auf und ähnelt daher stärker dem Ist-Ausfahrzustandssignal. Im Zeitpunkt t₂ unterschreitet dann auch das geglättete Ausfahrzustandssignal MW1 den unteren Grenzwert SW-Y. Dies ist das Einschaltkriterium für den Kompressor 2. Die Regelelektronik 4 schaltet also den Kompressor 2 ein, sobald beide geglättete Ausfahrzustandssignale MW1, MW2 den unteren Grenzwert SW-Y des Toleranzbandes unterschreiten. Durch Einschalten des Kompressors 2 wird die Luftfeder 1 mit Druckluft beaufschlagt, was dazu führt, dass die Radaufhängung ausgefahren und die durch das Aufsteigen des Sozius bewirkte Fahrzeugabsenkung allmählich kompensiert wird.

Wie aus Figur 2 ersichtlich ist, steigen nach dem Einschalten des Kompressors 2 das den Ist-Ausfahrzustand repräsentierende Ist-Signal sowie die beiden geglätteten Ausfahrzustandsignale MW1 und MW2 zeitlich verzögert an. Der Kompressor 2 bleibt so lange eingeschaltet, bis eines der beiden geglätteten Ausfahrzustandssignale den Sollwert SW erreicht. Da die Zeitkonstante des geglätteten Ausfahrzustandssignals MW2 kleiner ist als die Zeitkonstante des geglätteten Ausfahrzustandssignals MW1 erreicht das geglättete Ausfahrzustandssignals MW2 schneller den Sollwert als das geglättete Ausfahrzustandssignals MW1. Im Zeitpunkt t₃ erreicht das geglättete Ausfahrzustandssignals MW2 den Sollwert SW, was von der Regelelektronik 4 als Abschaltkriterium für den Kompressor 2 angesehen wird.

Da die beiden geglätteten Ausfahrzustandssignale MW1 und MW2 aus dem momentanen Ist- Ausfahrzustandssignal und zeitlich zurückliegend gemessenen Ausfahrzustandsignalen gebildet werden, kann es sein, dass die Signale MW1 und MW2 nach dem Abschalten des Kompressors 2 "überschwingen", d. h. dass sie über den oberen Grenzwert SW+X des Toleranzbandes anwachsen. Im Zeitpunkt t₄ überschreiten die beiden geglätteten Ausfahrzustandssignale MW1, MW2 den oberen Grenzwert SW+X, was als Kriterium zum Entlüften des Entlüftungsventils 3 angesehen wird. Die Luftfeder 1 wird also über das Entlüftungsventil 3 entlüftet, wenn beide geglätteten Ausfahrzustandssignale MW1, MW2 den oberen Grenzwert SW+X des Toleranzbandes überschreiten. Das Entlüftungsventil 3 kann dabei kontinuierlich oder zeitlich gepulst entlüftet werden. Das Entlüften wird beendet, wenn entweder eines der beiden geglätteten Ausfahrzustandssignale MW1, MW2 auf den Sollwert SW abgesunken ist oder wenn eines der beiden geglätteten Ausfahrzustandssignale MW1, MW2 den oberen Grenzwert SW+X oder einen anderen vorgegebenen Wert unterschreitet.

Mit einer derartigen Regelung kann innerhalb weniger Ein- und Ausschaltzyklen des Kompressors der Ausfahrzustand der Radaufhängung in das vorgegebene Toleranzband eingeregelt werden.

## Patentansprüche

1. Radaufhängung für Fahrzeuge, bei welcher der Ausfahrzustand der Radaufhängung durch eine Regelelektronik (4) geregelt wird, wobei
• eine Sensorik (5) zur Messung des momentanen Ausfahrzustandes
• der Radaufhängung vorgesehen ist, und die Sensorik (5) der Regelelektronik (4) ein dem momentanen Ausfahrzustand entsprechendes Ist-Signal zuführt,
• die Regelelektronik (4) aus dem momentanen Ist-Signal und zeitlich zurückliegend gemessenen Ist-Signalen ein erstes geglättetes Signal (MW1) bildet,
• die Regelelektronik (4) aus dem momentanen Ist-Signal und zeitlich zurückliegend gemessenen Ist-Signalen ein sich von dem ersten geglätteten Signal (MW1) unterscheidendes zweites geglättetes Signal (MW2) bildet,
• die Regelelektronik (4) überprüft, ob die beiden geglätteten Signale (MW1, MW2) innerhalb eines vorgegebenen Signalbandes (SW+X, SW-Y) liegen, das durch einen oberen Grenzwert (SW+X), der oberhalb eines vorgegebenen Sollwerts (SW) liegt, und durch einen unteren Grenzwert (SW-Y), der unterhalb des Sollwerts (SW) liegt, gebildet ist, wobei die Regelelektronik (4) die Radaufhängung ausgehend von einem momentanen Ausfahrzustand weiter ausfährt, wenn die beiden geglätteten Signale (MW1, MW2) den unteren Grenzwert (SW-Y) unterschreiten und das weitere Ausfahren beendet, wenn eines der beiden geglätteten Signale (MW1, MW2) auf einen vorgegebenen Wert (SW) angestiegen ist.

2. Verfahren zum Regeln des Ausfahrzustandes einer durch eine Regelelektronik (4) ein- und ausfahrbaren Radaufhängung eines Fahrzeugs, wobei
• der Regelelektronik (4) ein dem momentanen Ausfahrzustand entsprechendes Ist-Signal zugeführt wird,
• die Regelelektronik (4) aus dem Ist-Signal und zeitlich zurückliegend gemessenen Ist-Signalen ein erstes geglättetes Signal (MW1) bildet,
• die Regelelektronik (4) aus dem Ist-Signal und zeitlich zurückliegend gemessenen Ist-Signalen ein sich von dem ersten geglätteten Signal (MW1) unterscheidendes zweites geglättetes Signal (MW2) bildet,
• die Regelelektronik (4) überprüft, ob die beiden geglätteten Signale (MW1, MW2) innerhalb eines vorgegebenen Signalbandes (SW+X, SW-Y) liegen, das durch einen oberen Grenzwert (SW+X), der oberhalb eines vorgegebenen Sollwerts (SW) liegt, und durch einen unteren Grenzwert (SW-Y), der unterhalb des Sollwerts (SW) liegt, gebildet ist, wobei die Regelelektronik die Radaufhängung ausgehend von einem momentanen Ausfahrzustand weiter ausfährt, wenn die beiden geglätteten Signale (MW1, MW2) den unteren Grenzwert (SW-Y) unterschreiten und das weitere Ausfahren beendet, wenn eines der beiden geglätteten Signale auf einen vorgegebenen Wert (SW) angestiegen ist.

3. Radaufhängung bzw. Verfahren nach Anspruch 1 bzw. 2, wobei der vorgegebene Wert der Sollwert (SW) ist.

4. Radaufhängung bzw. Verfahren nach einem der vorangehenden Ansprüche, wobei die Regelelektronik (4) die Radaufhängung einfährt, wenn die beiden geglätteten Signalen (MW1, MW2) den oberen Grenzwert (SW+X) überschreiten.

5. Radaufhängung bzw. Verfahren nach Anspruch 3, wobei die Regelelektronik (4) das Einfahren der Radaufhängung beendet, wenn eines der beiden geglätteten Signale auf einen vorgegebenen Wert (SW) abgesunken ist.

6. Radaufhängung bzw. Verfahren nach Anspruch 4, das Einfahren der Radaufhängung beendet wird, wenn eines der beiden geglätteten Signale (MW1, MW2) auf den Sollwert (SW) abgesunken ist.

7. Radaufhängung bzw. Verfahren nach Anspruch 4, wobei das Einfahren beendet wird, wenn eines der beiden geglätteten Signale (MW1, MW2) auf den oberen Grenzwert (SW+X) abgesunken ist.

8. Radaufhängung bzw. Verfahren nach einem der vorangehenden Ansprüche, wobei die Regelelektronik (4) den Ausfahrzustand der Radaufhängung unverändert lässt, wenn mindestens eines der beiden geglätteten Signale (MW1, MW2) innerhalb des Signalbandes (SW+X, SW-Y) liegt.

9. Radaufhängung bzw. Verfahren nach einem der vorangehenden Ansprüche, wobei zur Bildung des ersten geglätteten Signals (MW1) zusätzlich zu den zur Bildung des zweiten geglätteten Signals (MW2) verwendeten zeitlich zurückliegend gemessenen Ist-Signalen weitere, zeitlich noch weiter zurückliegend gemessene Ist-Signale verwendet werden.

10. Radaufhängung bzw. Verfahren nach einem der vorangehenden Ansprüche, wobei ein Geschwindigkeitssensor vorgesehen ist, welcher der Regelelektronik (4) ein der momentanen Fahrzeuggeschwindigkeit (v) entsprechendes Signal liefert, wobei die Regelelektronik (4) die Radaufhängung nur dann ein- oder ausfährt, wenn die Fahrzeuggeschwindigkeit (v) größer als ein vorgegebener Geschwindigkeitswert (v₀) ist.

11. Radaufhängung bzw. Verfahren nach einem der vorangehenden Ansprüche, wobei die Radaufhängung eine Luftfeder (1) aufweist und durch Druckbeaufschlagung der Luftfeder (1) ausfahrbar ist.

12. Radaufhängung bzw. Verfahren nach Anspruch 10, wobei die Luftfeder (1) zum Ausfahren der Radaufhängung unmittelbar von einem Verdichter (2) mit Druckluft beaufschlagt wird.

13. Radaufhängung bzw. Verfahren nach einem der Ansprüche 10 oder 11, wobei ein Entlüftungsventil (3) vorgesehen ist, über welches die Luftfeder (1) entlüftbar und die Radaufhängung einfahrbar ist, wobei das Entlüftungsventil (3) durch die Regelelektronik (4) angesteuert wird.

14. Radaufhängung bzw. Verfahren nach einem der Ansprüche 1 bis 12, wobei das Fahrzeug ein Motorrad ist.

15. Radaufhängung bzw. Verfahren nach einem der Ansprüche 1 bis 12, wobei das Fahrzeug ein drei- oder mehrrädriges Fahrzeug ist.

## Claims

1. A wheel suspension for vehicles, wherein the extended state of the wheel suspension is controlled by an electronic control unit (4), wherein
• a sensor (5) is provided for measuring the instantaneous extended state of the wheel suspension and supplies the electronic control unit (4) with an actual signal corresponding to the instantaneous extended state,
• the electronic control unit (4) generates a first smoothed signal (MW1) from the instantaneous actual signal and previously measured actual signals,
• the electronic control unit (4), during the instantaneous actual signal and previously measured actual signals, generates a second smoothed signal (MW2) differing from the first smoothed signal (MW1), and
• the electronic control unit (4) checks whether both smoothed signals (MM1, MW2) lie within a specified signal band (SW+S, SW-Y) formed by an upper limit (SW+X) above a prescribed set value (SW) and a lower limit (SW-Y) below the set value (SW), wherein the electronic control unit (4) continues to extend the wheel suspension, starting from an instantaneous extended state, when both smoothed signals (MW1, MW2) fall below the lower limit (SW-Y), and terminates the continued extension when one of the two smoothed signals (MW1, MW2) has risen to a specified value (SW).

2. A method of controlling the extended state of a vehicle wheel suspension retractable and extendable by an electronic control unit (4), wherein
• the electronic control unit (4) is supplied with an actual signal corresponding to the instantaneous extended state,
• the electronic control unit (4), using the actual signal and previously measured actual signals, generates a first smoothed signal (MW1),
• the electronic control unit (4), using the actual signal and previously measured actual signals, generates a second smoothed signal (MW2) differing from the first smoothed signal (MW1), and
• the electronic control unit (4) checks whether both smoothed signals (MM1, MW2) lie within a specified signal band (SW+S, SW-Y) formed by an upper limit (SW+X) above a prescribed set value (SW) and a lower limit (SW-Y) below the set value (SW), wherein the electronic control unit (4) continues to extend the wheel suspension, starting from an instantaneous extended state, when both smoothed signals (MW1, MW2) fall below the lower limit (SW-Y), and terminates the continued extension when one of the two smoothed signals (MW1, MW2) has risen to a specified value (SW).

3. A wheel suspension or method according to claim 1 or claim 2, wherein the specified value is the set value (SW).

4. A wheel suspension or method according to any of the preceding claims, wherein the electronic control unit (4) retracts the wheel suspension when both smoothed signals (MW1, MW2) exceed the upper limit (SW+X).

5. A wheel suspension or method according to claim 3, wherein the electronic control unit (4) stops retracting the wheel suspension when one of the two smoothed signals has fallen to a specified value (SW).

6. A wheel suspension or method according to claim 4, wherein retraction of the wheel suspension is stopped when one of the two smoothed signals (MW1, MW2) has fallen to the set value (SW).

7. A wheel suspension or method according to claim 4, wherein retraction is stopped when one of the two smoothed signals (MW1, MW2) has fallen to the upper limit (SW+X).

8. A wheel suspension or method according to any of the preceding claims, wherein the electronic control unit (4) leaves the extended state of the wheel suspension unchanged if at least one of the two smoothed signals (MW1, MW2) lies within the signal band (SW+X, SW-Y).

9. A wheel suspension or method according to any of the preceding claims, wherein in order to form the first smoothed signal (MW1), actual signals measured even earlier are used in addition to the previously measured actual signals used for generating the second smoothed signal (MW2).

10. A wheel suspension or method according to any of the preceding claims, wherein a speed sensor is provided and supplies the electronic control unit (4) with a signal corresponding to the instantaneous speed (v) of the vehicle, wherein the electronic control unit (4) retracts or extends the wheel suspension only when the speed (v) is greater than a specified speed (vₒ).

11. A wheel suspension or method according to any of the preceding claims, wherein the wheel suspension comprises a pneumatic spring (1) which is extendable by pressurising.

12. A wheel suspension or method according to claim 10, wherein the pneumatic spring (1) for extending the wheel suspension is directly supplied with compressed air by a compressor (2).

13. A wheel suspension or method according to claim 10 or claim 11, wherein a vent valve (3) is provided for venting the pneumatic spring (1) and retracting the wheel suspension, the vent valve (3) being actuated by the electronic control unit (4).

14. A wheel suspension or method according to any of claims 1 to 12, wherein the vehicle is a motorcycle.

15. A wheel suspension or method according to any of claims 1 to 12, wherein the vehicle has three or more wheels.

## Revendications

1. Suspension de roue pour véhicules, pour laquelle l'état de soulèvement de la suspension est régulé par une électronique de régulation (4), et
- des capteurs (5) mesurent l'état de soulèvement momentané de la suspension et transmettent à l'électronique de régulation (4) un signal réel correspondant à l'état de soulèvement momentané,
- l'électronique de régulation (4) forme un premier signal (MW1) lissé à partir du signal réel momentané et des signaux réels mesurés antérieurement,
- l'électronique de régulation (4) forme un deuxième signal (MW2) lissé, différent du premier signal (MW1) lissé, à partir du signal réel momentané et des signaux réels mesurés antérieurement,
- l'électronique de régulation (4) vérifie si les deux signaux (MW1, MW2) lissés se situent à l'intérieur d'une bande de signal (SW+X, SW-Y) prédéterminée qui est définie par une valeur limite supérieure (SW+X) située au-dessus d'une valeur de consigne (SW) prédéterminée, et par une valeur limite inférieure (SW-Y) située en dessous de la valeur de consigne (SW), l'électronique de régulation (4) soulevant davantage la suspension à partir d'un état de soulèvement momentané si les deux signaux lissés (MW1, MW2) passent en dessous de la valeur limite inférieure (SW-Y) et termine le soulèvement si l'un des deux signaux (MW1, MW2) lissés est monté jusqu'à une valeur (SW) prédéterminée.

2. Procédé de régulation de l'état de soulèvement d'une suspension de roue d'un véhicule pouvant être soulevée puis descendue par une électronique de régulation (4),
**caractérisé en ce que**
- l'électronique de régulation (4) reçoit un signal réel correspondant à l'état de soulèvement momentané,
- l'électronique de régulation (4) forme un premier signal (MW1) lissé à partir du signal réel et de signaux réels mesurés antérieurement,
- l'électronique de régulation (4) forme un deuxième signal (MW2) lissé, différent du premier signal (MW1) lissé, à partir du signal réel et des signaux réels mesurés antérieurement,
- l'électronique de régulation (4) vérifie si les deux signaux (MW1, MW2) lissés se situent à l'intérieur d'une bande de signal (SW+X, SW-Y) prédéterminée qui est définie par une valeur limite supérieure (SW+X) située au-dessus d'une valeur de consigne (SW) prédéterminée, et par une valeur limite inférieure (SW-Y) située en dessous de la valeur de consigne (SW), l'électronique de régulation (4) soulevant davantage la suspension à partir d'un état de soulèvement momentané si les deux signaux (MW1, MW2) lissés passent en dessous de la valeur limite inférieure (SW-Y) et termine le soulèvement si l'un des deux signaux (MW1, MW2) lissés est monté jusqu'à une valeur (SW) prédéterminée.

3. Suspension de roue ou procédé selon la revendication 1 ou 2, la valeur prédéterminée étant la valeur de consigne (SW).

4. Suspension de roue ou procédé selon l'une des revendications précédentes,
**caractérisée en ce que**
l'électronique de régulation (4) descend la suspension si les deux signaux (MW1, MW2) lissés passent au-dessus de la valeur limite supérieure (SW+X).

5. Suspension de roue ou procédé selon la revendication 3,
**caractérisée en ce que**
l'électronique de régulation (4) termine le soulèvement de la suspension lorsque l'un des deux signaux lissés descend jusqu'à une valeur prédéterminée (SW).

6. Suspension de roue ou procédé selon la revendication 4,
**caractérisée en ce que**
la descente de la suspension se termine lorsque l'un des deux signaux (MW1, MW2) lissés descend jusqu'à la valeur de consigne (SW).

7. Suspension de roue ou procédé selon la revendication 4,
**caractérisée en ce que**
la descente se termine lorsque l'un des deux signaux (MW1, MW2) lissés descend jusqu'à la valeur limite supérieure (SW+X).

8. Suspension de roue ou procédé selon l'une des revendications précédentes,
**caractérisée en ce que**
l'électronique de régulation (4) maintient inchangé l'état de soulèvement de la suspension de roue si au moins l'un des deux signaux (MW1, MW2) lissés se situe à l'intérieur de la bande de signal (SW+X, SW-Y).

9. Suspension de roue ou procédé selon l'une des revendications précédentes,
**caractérisée en ce que**
pour la formation du premier signal (MW1) lissé, on utilise d'autres signaux réels, mesurés encore antérieurement aux signaux réels mesurés antérieurement utilisés pour la formation du deuxième signal (MW2).

10. Suspension de roue ou procédé selon l'une des revendications précédentes,
**caractérisée en ce qu'**
un capteur de vitesse fournit à l'électronique de régulation (4) un signal correspondant à la vitesse momentanée (v) du véhicule, l'électronique de régulation ne soulevant ou descendant la suspension de roue que si la vitesse du véhicule (v) est supérieure à une valeur de vitesse prédéterminée (v₀).

11. Suspension de roue ou procédé selon l'une des revendications précédentes,
**caractérisée en ce que**
la suspension de roue présente un amortisseur pneumatique (1) qui la soulève par pressurisation.

12. Suspension de roue ou procédé selon la revendication 10,
**caractérisée en ce que**
pour le soulèvement de la suspension, l'amortisseur pneumatique (1) est pressurisé par de l'air comprimé directement à l'aide d'un compresseur (2).

13. Suspension de roue ou procédé selon l'une des revendications 10 ou 11,
**caractérisée en ce qu'**
une soupape de purge d'air (3) permet de purger en air l'amortisseur pneumatique (1) et de redescendre la suspension de roue, la soupape de purge d'air (3) étant commandée par l'électronique de régulation (4).

14. Suspension de roue ou procédé selon l'une des revendications 1 à 12, le véhicule étant une motocyclette.

15. Suspension de roue ou procédé selon l'une des revendications 1 à 12, le véhicule étant un véhicule à trois roues ou plus.
